# EUROPEAN PATENT SPECIFICATION

(11) **EP 1 185 102 B1**
(45) Date of publication and mention of the grant of the patent: **11.05.2011**
(21) Application number: 01302923.6
(22) Date of filing: 28.03.2001
(51) Int. Cl.: H04N 5/93

(54) **Video processing integrated circuit**
Integrierte Schaltung für Videobearbeitung
Circuit monolithique pour la traitement de vidéo

(30) Priority: 05.09.2000 KR 2000052372
(43) Date of publication of application: 06.03.2002
(73) Proprietor: SAMSUNG ELECTRONICS CO., LTD., Suwon-si, Gyeonggi-do 442-742 (KR)
(72) Inventor: Kim, Chul-min, Suwon-City, Kyungki-do (KR)
(74) Representative: Walaski, Jan Filip

(56) References cited:
- EP-A- 0 472 065
- EP-A- 0 595 629
- US-A- 4 641 206
- US-A- 5 164 862
- KAWANO ET AL: "A Single Chip Y/C Signal Processing IC for VHS VCRs" IEEE TRANSACTIONS ON CONSUMER ELECTRONICS, vol. 35, no. 4, November 1989 (1989-11), pages 741-747, XP000087092 New York, US

## Description

The present invention relates to a video signal processing integrated circuit comprising a luminance signal processing path having an output signal level setting means.

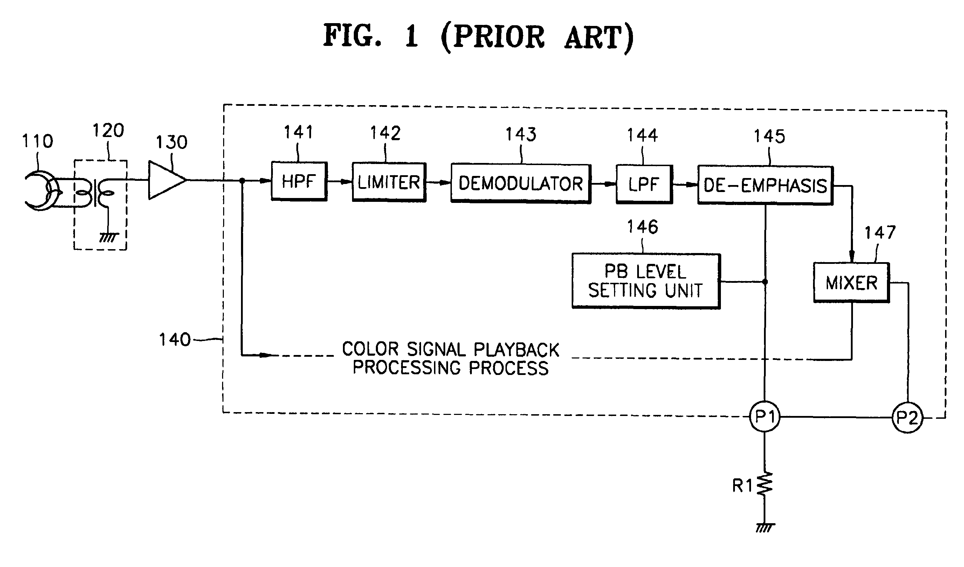

As shown in Figure 1, a conventional video cassette recorder (VCR) playback circuit includes a video head 110, a rotary transformer 120, a pre-amplifier 130 and a video signal processing integrated circuit 140 comprising a high-pass filter 141, a limiter 142, a demodulator 143, a low-pass filter 144, a de-emphasis unit 145, a playback level setting unit 146 and a mixer 147.

In a playback mode, a modulated video signal detected by the video head 110 is input to the pre-amplifier 130 via the rotary transformer 120 to then be amplified by the pre-amplifier 130 with a predetermined gain, and is then input to the high-pass filter 141 of the video signal processing IC 140.

Then, the high-pass filter 141 blocks the low-frequency colour signal from among signals input thereto and allows the high-frequency frequency-modulated (FM) luminance signal to pass through. The high-pass filtered FM luminance signal passes through the limiter 142, which prevents black and white inversion occurring during demodulation, and is input to the demodulator 143. Then, the demodulated luminance signal is input to the low-pass filter 144 to reduce a high-frequency component noise and is then applied to the de-emphasis unit 145.

The de-emphasis unit 145 is designed to have a frequency characteristic which is the inverse of that of a pre-emphasis unit employed for recording. Accordingly, the de-emphasis unit 145 functions to ensure that the demodulated luminance signal the same frequency characteristic as the recorded luminance signal. The playback video level varies according to the gain of an amplifier constituting the de-emphasis unit 145. Thus, conventionally, the gain of the playback level setting unit 146 is determined during manufacture of the video signal processing IC 140. During manufacture of the video signal processing IC 140, the gain of the playback level setting unit 146 is set by a resistor R1 attached to a pin P1. Thus, an error in the playback level may arise because of the tolerance of the resistor R1.

The luminance signal output from the de-emphasis unit 145 is mixed with a colour signal output from a colour signal playback process by the mixer 147 and is then output at another pin P2.

As described above, the conventional video signal processing IC is designed such that a variable resistor or fixed resistor for determining is necessarily added to the de-emphasis output pin port of the video signal processing IC, which increases the number of components, thereby lowering the manufacturing efficiency, increasing the cost and causing a deviation in the PB level due to the tolerance of the resistors used.

Kawano et al: "A Single Chip Y/C Signal Processing IC for VHS VCRs" IEEE Transactions on consumer Electronics, Vol. 35, No. 4, November 1989 (1989-11), New York, US discloses an IC composed of luminance and chrominance signal processing circuits for handling fundamental video signal processing which includes filters that are adjustment-free.

EP 0595629 A1 discloses a trimming circuit that has a plurality of Zener zapping diodes, a group of switching devices for selectively zapping the Zener zap diodes, and a decoder circuit for controlling the ON/OFF states of the switching devices.

An integrated circuit according to the present invention is characterised in that the output signal level setting means does not require an external gain setting element.

According to the present invention, there is provided a video signal processing IC according to claim 1 and a method of setting a level of a reproduced video signal of a de-emphasis circuit in a video signal processing IC according to claim 5.

An embodiment of the present invention will now be described, by way of example, with reference to the accompanying drawings, in which:
Figure 1 is a schematic diagram illustrating the reproducing circuit of a conventional video cassette recorder;
Figure 2 is a schematic diagram illustrating a reproducing circuit of a video cassette recorder having a video signal processing integrated circuit according to the present invention;
Figure 3 is a diagram illustrating the relationship between modulation/demodulation of an FM signal and a video signal; and
Figure 4 is a detailed circuit diagram illustrating the PB level setting unit shown in Figure 2.

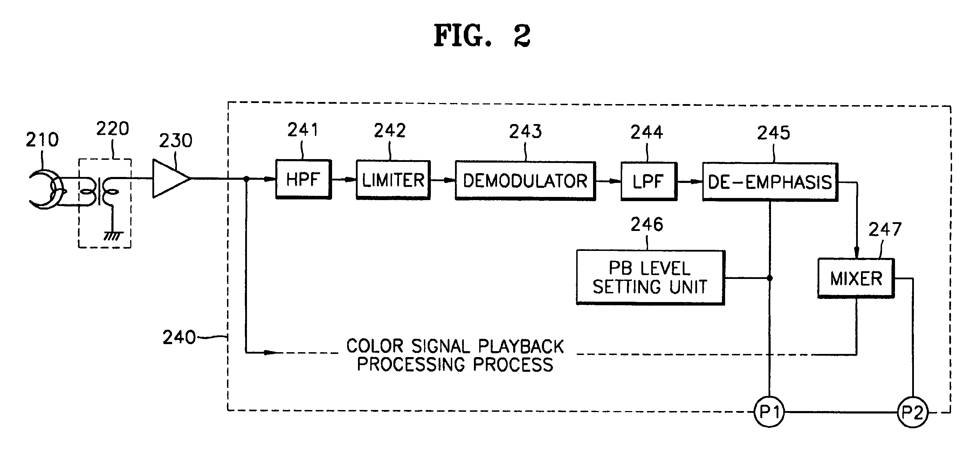

Referring to Figure 2, a reproducing circuit of a VCR having a video signal processing IC according to the present invention includes a video head 210, a rotary transformer 220, a pre-amplifier 230, and a video signal processing IC 240 having a high-pass filter 241, a limiter 242, a demodulator 243, a low-pass filter 244, a de-emphasis unit 245, a playback level setting unit 246 and a mixer 247.

In general, the de-emphasis unit 245 and the playback level setting unit 246 constitute a de-emphasis circuit whose function is provided by a single circuit block.

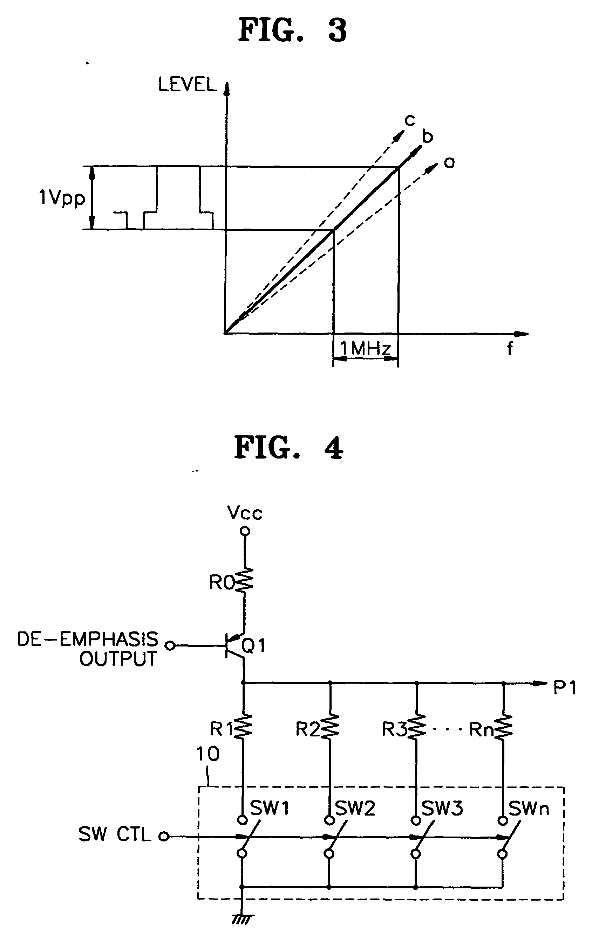

Referring to Figure 4, the playback level setting unit 246 comprises an amplifier consisting of a transistor Q1, a plurality a switched gain-setting resistors R0, R1,...Rn and a gain-control switching unit 10.

The basic operation of a VCR will now be described.

During a reproduction, a modulated video signal detected by a video head 210 is input to the pre-amplifier 230 via the rotary transformer 220 and amplified by a predetermined amount by the pre-amplifier 230. The amplified signal is then output to the high-pass filter 241 of the video signal processing IC 240.

The high-pass filter 241 blocks low-frequency colour signal components contained in the modulated video signal and passes the high-frequency frequency-modulated (FM) luminance signal component.

The FM luminance signal output from the high-pass filter 241 is a mixed signal with a low-frequency FM wave having a large amplitude and a high-frequency FM carrier wave having a low amplitude. Accordingly, black and white inversion can occur during demodulation. In order to prevent the black and white inversion, the high-pass filtered FM luminance signal is limited to a constant reference level by the limiter 242.

The demodulator 243 receives the output of the limiter 242 and demodulates the same to restore the FM luminance signal having a frequency deviation of 1 MHz into an unmodulated state signal. Then, the demodulated luminance signal is filtered by the low-pass filter 244 to reduce noise and the output of the low-pass filter 244 is input to the de-emphasis unit 245.

The de-emphasis unit 245 is designed such that its internal amplifier circuit has a frequency characteristic inverse which is the inverse of a corresponding pre-emphasis amplifier used for recording.

The gain of the de-emphasis unit 245 is adjusted to set the output level of a reproduced video signal to a prescribed level by the playback level setting unit 246.

The reproduced video signal has a 1V peak-peak amplitude for a 1MHz deviation of the modulated signal in accordance with the Video Home System (VHS) standard, as shown in Figure 3. However, the slope of the linear relationship between reproduced luminance signal level and frequency deviation during demodulation may decrease or increase as indicated by dotted lines a and c, due to a differences in the characteristics of elements used for manufacturing the video signal processing ICs. Accordingly, in the course of manufacturing a video signal processing IC 240, the playback level setting unit 256 controls that gain so that the reproduced luminance signal level is accurately set to 1 V peak-peak for a 1MHz deviation.

The operation of the playback level setting unit 246 will now be described with reference to Figure 4.

The de-emphasised signal of the de-emphasis unit 245 is applied to a base terminal of the transistor Q1 of the amplifier. The gain of the amplifier is determined by the value of the resistors R1, R2,..., Rn parallel-connected to the collector terminal of the transistor Q1.

The resistors R1, R2,..., Rn are grounded through respective switches SW1, SW2,..., SWn. Thus, the resistors connected to OFF switches among the switches SW1, SW2,..., SWn do not affect the gain value and only the resistors connected to ON switches affect the gain value of the amplifier. In particular, the ground connected to the switches SW1, SW2,..., SWn is connected to the ground exclusively used for a luminance signal processing process, different from the ground used for a colour signal reproduction processing process. This is for the purpose of preventing noise generated in the course of processing a colour signal from affecting the luminance signal through separation of grounds used for luminance signal processing and colour signal processing.

An FM luminance signal having a frequency deviation of 1 MHz is input to the demodulator 243 of the video signal processing IC 240 during manufacture of the video signal processing IC 240 using the above-described principle. Then, the gain level of the amplifier of the playback level setting unit 246 is set such that the reproduced video signal level output from the video signal processing IC 240 becomes 1 V peak-peak under a termination condition of 75Ω. The gain is set by opening and closing the switches SW1, SW2,..., SWn of the gain-control switching unit 10.

The switches SW1, SW2,..., SWn comprise Zener diodes, and can be designed so as to determine ON/OFF switching using Zener breakdown characteristics of the Zener diodes. In other words, if a voltage greater than or a breakdown voltage is applied to a Zener diode to be switched on, a Zener breakdown phenomenon in which the resistance of the Zener diode becomes substantially zero, occur so that the Zener diode is shorted, which is generally called Zener zapping.

As described above, according to the present invention, all circuit elements constituting a circuit which determines the level of a reproduced video signal of a de-emphasis circuit, are incorporated into a video signal processing IC at design time, thereby removing external circuit elements, including a resistor of the output terminal of the de-emphasis circuit of the video signal processing IC.

In the embodiment of the present invention, the amplifier in the playback level setting unit 246 comprises one transistor and some resistors. However, a differential amplifier could be used.

According to the embodiment of the present invention, the number of components can be reduced by designing all circuit elements constituting a circuit which determines the level of a reproduced video signal of a de-emphasis circuit to be incorporated into a video signal processing IC, thereby reducing the cost. Also, the deviation in the playback level due to an external component deviation can be reduced. Further, the material cost can also be reduced.

## Claims

1. A video signal processing integrated circuit IC (240) including a de-emphasis circuit (245) and a reproduced video level setting unit (246) for determining the level of a reproduced video signal of the de-emphasis circuit, wherein the reproduced video level setting unit comprises:
an amplification unit for amplifying a demodulated luminance signal output from the de-emphasis circuit; and
a gain-controlled switching unit (10), connected to a plurality of resistance elements for determining the gain of the amplification unit, for switching electrical connection of the plurality of resistance elements according to the reproduced video level to set the gain of the amplification unit.

2. The video signal processing IC according to claim 1, wherein the gain-controlled switching unit is formed of a Zener diode and ON/OFF switching is determined using a Zener breakdown characteristic of the Zener diode.

3. The video signal processing IC according to claim 1, wherein switching control of the gain-controlled switching unit is determined such that, after inputting a luminance signal modulated with a frequency deviation of 1 MHz, the output level of the reproduced video signal of the video signal processing IC becomes 1 Vpp under a termination condition of 75 Ω.

4. The video signal processing integrated circuit ICof any one of the preceding claims, comprising a luminance signal processing block and a color signal processing block, wherein the de-emphasis circuit is in the luminance signal processing block and the reproduced video level setting unit is connected to a ground exclusively used for the luminance signal processing block.

5. A method of setting a level of a reproduced video signal of a de-emphasis circuit (245) in a video signal processing integrated circuit IC (240), the IC comprising:
an amplification unit for amplifying a demodulated luminance signal output from a de-emphasis circuit; and
a gain-controlled switching unit, connected to a plurality of switchable resistance elements for determining the gain of the amplification unit;
said method comprising switching electrical connection of the plurality of resistance elements according to the reproduced video signal level during manufacture of the video signal processing IC to set the gain of the amplification unit.

6. A method according to claim 5, further comprising,
inputting a luminance signal modulated with a frequency deviation of 1 MHz, and
setting the gain level of the amplification unit such that the output level of a reproduced video signal of the video signal processing IC becomes 1 Vpp under a termination condition of 75 Ω.

## Patentansprüche

1. Integrierte Schaltung bzw. IC (240) für Videosignalbearbeitung, die einen Rückentzerrungsschaltkreis (245) und eine Einstelleinheit (246) für reproduzierten Videosignalpegel zum Ermitteln des Pegels eines reproduzierten Videosignals des Rückentzerrungsschaltkreises einschließt, wobei die Einstelleinheit für reproduzierten Videosignalpegel umfasst:
eine Verstärkereinheit zum Verstärken eines demodulierten Luminanzsignalausgangs von der Rückentzerrungsschaltung; und
eine Schalteinheit (10) mit geregelter Verstärkung, die mit einer Vielheit von Widerstandselementen zum Ermitteln der Verstärkung der Verstärkungseinheit, zum Schalten elektrischer Verbindung der Vielheit von Widerstandselementen, gemäß dem reproduzierten Videosignalpegel, verbunden ist, um die Verstärkung der Verstärkungseinheit einzustellen.

2. Integrierte Schaltung für Videosignalbearbeitung nach Anspruch 1, wobei die Schalteinheit mit geregelter Verstärkung aus einer Zener-Diode gebildet ist und EIN-/AUS-Schaltung unter Verwendung eines Zener-Kippverhaltens der Zener-Diode bestimmt wird.

3. Integrierte Schaltung für Videosignalbearbeitung nach Anspruch 1, wobei Schaltkontrolle der Schalteinheit mit geregelter Verstärkung so bestimmt wird, dass nach Eingabe eines Luminanzsignals, das mit einer Frequenzabweichung von 1 MHz moduliert wurde, der Ausgabepegel des reproduzierten Videosignals der integrierten Schaltung für die Videosignalbearbeitung, unter einem Abschlusszustand von 75 Ω, 1vpp wird.

4. Integrierte Schaltung für Videosignalbearbeitung nach einem beliebigen der vorhergehenden Ansprüche, die einen Luminanzsignal-Bearbeitungsblock und einen Farbsignal-Bearbeitungsblock umfasst, wobei sich die Rückentzerrungsschaltung im Luminanzsignal-Bearbeitungsblock befindet und die Einstelleinheit für reproduzierten Videosignalpegel an einen Erdleiter angeschlossen ist, der ausschließlich für den Luminanzsignal-Bearbeitungsblock verwendet wird.

5. Verfahren zur Einstellung eines Pegels eines reproduzierten Videosignals von einer Rückentzerrungsschaltung (245) in einer integrierten Schaltung für Videosignalbearbeitung (240), wobei die integrierte Schaltung umfasst:
eine Verstärkereinheit zum Verstärken eines demodulierten Luminanzsignalausgangs von einer Rückentzerrungsschaltung; und
eine Schalteinheit mit geregelter Verstärkung, die an eine Vielheit schaltbarer Widerstandselemente zum Bestimmen der Verstärkung der Verstärkungseinheit angeschlossen ist;
wobei besagtes Verfahren Schalten elektrischer Verbindung der Vielheit von Widerstandselementen, gemäß dem reproduzierten Videosignalpegel, während Herstellung der integrierten Schaltung für Videosignalbearbeitung umfasst, um die Verstärkung der Verstärkungseinheit einzustellen.

6. Verfahren nach Anspruch 5, weiter umfassend,
Eingeben eines Luminanzsignals, das mit einer Frequenzabweichung von 1 MHz, moduliert ist,
und
Einstellen des Verstärkungspegels der Verstärkungseinheit derartig, dass der Ausgangspegel eines reproduzierten Videosignals der integrierten Schaltung für Videosignalbearbeitung, unter einem Abschlusszustand von 75 Ω, 1vpp wird.

## Revendications

1. Circuit monolithique pour le traitement de signaux vidéo (240) comportant un circuit de désaccentuation (245) et une unité de réglage du niveau de vidéo reproduite (246) pour déterminer le niveau d'un signal vidéo reproduit du circuit de désaccentuation, cas dans lequel l'unité de réglage du niveau de vidéo reproduite comprend :
une unité d'amplification pour amplifier une sortie de signal de luminance démodulée provenant du circuit de désaccentuation ; et
une unité de commutation à gain commandé (10), laquelle est connectée à une pluralité d'éléments de résistance pour déterminer le gain de l'unité d'amplification, afin de commuter la connexion électrique de la pluralité d'éléments de résistance en fonction du niveau vidéo reproduit dans le but de régler le gain de l'unité d'amplification.

2. Circuit monolithique pour le traitement de signaux vidéo selon la revendication 1, l'unité de commutation à gain commandé étant constituée d'une diode Zener et la fonction de commutation ON/OFF (marche/arrêt) étant déterminée à l'aide d'une caractéristique de claquage par effet Zener de la diode Zener.

3. Circuit monolithique pour le traitement de signaux vidéo selon la revendication 1, le pilotage de la commutation de l'unité de commutation à gain commandé étant déterminé de sorte qu'à la suite de l'introduction d'un signal de luminance modulé par un écart de fréquence de 1 MHz, le niveau de sortie du signal vidéo reproduit du circuit monolithique pour le traitement de signaux vidéo devient 1 Vpp sous une condition de terminaison de 75 ohms.

4. Circuit monolithique pour le traitement de signaux vidéo selon l'une quelconque des revendications précédentes, comprenant un bloc de traitement de signaux de luminance et un bloc de traitement de signaux de couleur, cas dans lequel le circuit de désaccentuation se trouve dans le bloc de traitement de signaux de luminance et l'unité de réglage du niveau de vidéo reproduite est connecté à une terre qui est exclusivement utilisée pour le bloc de traitement de signaux de luminance.

5. Procédé de réglage d'un niveau de signal vidéo reproduit d'un circuit de désaccentuation (245) dans un circuit monolithique pour le traitement de signaux vidéo (240), le circuit monolithique comprenant :
une unité d'amplification pour amplifier une sortie de signal de luminance démodulée provenant d'un circuit de désaccentuation ; et
une unité de commutation à gain commandé, laquelle est connectée à une pluralité d'éléments de résistance commutables pour déterminer le gain de l'unité d'amplification ;
ledit procédé comprenant l'opération consistant à commuter la connexion électrique de la pluralité d'éléments de résistance en fonction du niveau de signal vidéo reproduit pendant la fabrication du circuit monolithique pour le traitement de signaux vidéo dans le but de régler le gain de l'unité d'amplification.

6. Procédé selon la revendication 5, comprenant en outre les opérations consistant à :
introduire un signal de luminance modulé par un écart de fréquence de 1 MHz, et
régler le niveau de gain de l'unité d'amplification de sorte que le niveau de sortie d'un signal vidéo reproduit du circuit monolithique pour le traitement de signaux vidéo devient 1 Vpp sous une condition de terminaison de 75 ohms.
